(19) Europäisches Patentamt / European Patent Office / Office européen des brevets

(11) **EP 1 793 215 A1**

(12) **EUROPÄISCHE PATENTANMELDUNG**

(43) Veröffentlichungstag:
06.06.2007 Patentblatt 2007/23

(51) Int Cl.:
*G01K 15/00* (2006.01)

(21) Anmeldenummer: 06123411.8

(22) Anmeldetag: 03.11.2006

(84) Benannte Vertragsstaaten:
AT BE BG CH CY CZ DE DK EE ES FI FR GB GR HU IE IS IT LI LT LU LV MC NL PL PT RO SE SI SK TR
Benannte Erstreckungsstaaten:
AL BA HR MK YU

(30) Priorität: 30.11.2005 DE 102005058136

(71) Anmelder: Deutsches Zentrum für Luft- und Raumfahrt e.V.
51147 Köln (DE)

(72) Erfinder:
• Dr. Suslov, Dmitry
74219, Möckmühl (DE)
• Kopp, Wilfried
74074, Heilbronn (DE)
• Dr. Oschwald, Michael
74074, Heilbronn (DE)
• Haberzettl, Andreas
74223, Heilbronn (DE)

(74) Vertreter: Hoeger, Stellrecht & Partner
Patentanwälte
Uhlandstrasse 14 c
70182 Stuttgart (DE)

(54) **Verfahren und Vorrichtung zur Temperaturbestimmung mittels eines Thermoelements**

(57) Um ein Verfahren zur Temperaturbestimmung mittels eines Thermoelements zur Verfügung zu stellen, das mit geringem Aufwand, kostengünstig und gleichzeitig mit relativ hoher Genauigkeit durchgeführt werden kann, wird vorgeschlagen, dass die Thermospannung des Thermoelements gemessen wird, die zugehörige Standardtemperatur ($T_{Tab}$) aus einer Standardtabelle ermittelt wird und eine Ergebnistemperatur (T) aus der Standardtemperatur ($T_{Tab}$) und mindestens einem Parameter berechnet wird, wobei der mindestens eine Parameter zuvor durch eine Kalibrierung bei mindestens einer vorgegebenen Referenztemperatur bestimmt wurde.

FIG.1

**Beschreibung**

Die vorliegende Erfindung betrifft ein Verfahren zur Temperaturbestimmung mittels eines Thermoelements.

Die Erfindung betrifft ferner eine Vorrichtung zur Temperaturbestimmung, welche ein Thermoelement umfasst.

Aus der DE 20 2004 019 716 U1 ist ein Temperatur-Messsystem bekannt, welches einen Temperatursensor umfasst, der in Abhängigkeit von einer zu messenden Temperatur entsprechend einer sensorspezifischen Messkennlinie ein Temperatursignal erzeugt. Ferner ist ein Korrekturglied vorgesehen, das dem Temperatursensor nachgeschaltet ist und aus dem Temperaturmesssignal entsprechend einer Korrekturkennlinie ein korrigiertes Temperaturmesssignal bestimmt, das in einem Toleranzfeld einer vorgegebenen Normkennlinie liegt.

Aus der DE 2 221 147 ist eine Einrichtung zum Messen von Temperaturen bekannt, welche eine Temperaturabtastanordnung mit einem gegebenen Satz von Eigenschaften zum Liefern eines diese anzeigenden Ausgangssignals umfasst, und eine Reinakkumulationsanordnung umfasst, die eine Speicheranordnung zum Speichern des gegebenen Satzes von Eigenschaften umfasst und zur wiederholten Reinakkumulation der gespeicherten Eigenschaften auf das Ausgangssignal der Temperaturabtastanordnung anspricht, um eine genaue Anzeige der gemessenen Temperatur zu erzeugen.

In dem Artikel "Welche Thermospannungen entstehen in Thermoelement-Mess- und Kalibrierspaltungen?" von C. Amberg et al., tm - Technisches Messen 70 (2003) 11, Seiten 503 bis 509 werden die für Temperaturmessungen mit Thermoelementen und angeschlossenen Messgeräten mit und ohne Anschlussklemmen Temperatur-Kompensation auftretenden Thermospannungen beschrieben.

In dem Artikel "Selbstkalibrierende Thermoelemente - Modeling und Design" von H. Lehmann und F. Bernhard in tm - Technisches Messen 64 (1997) 3, Seiten 91 bis 99 sind Untersuchungen des dynamischen Verhaltens von Thermoelementen mit integrierter Miniaturfixpunktzelle und die erreichbare Kalibrierungsunsicherheit anhand von Modellen beschrieben.

Thermoelemente werden zur Bestimmung von Temperaturen in den verschiedensten Bereichen der Technik und Forschung eingesetzt. Ihre Funktionsweise beruht auf dem Effekt, dass zwei unterschiedliche Metalle oder metallische Legierungen, die miteinander in Kontakt stehen, eine temperaturabhängige Thermospannung erzeugen. Je nach Zusammensetzung der verwendeten Legierungen werden die Thermoelemente in verschiedene Typen eingeteilt, wie z. B. Typ K (NiCr/NiAl oder NiCr/Ni), Typ N (NiCrSi/NiSiMg) oder Typ J (Fe/CuNi).

Thermoelemente werden zur Bestimmung von Temperaturen in den verschiedensten Bereichen der Technik und Forschung eingesetzt. Ihre Funktionsweise beruht auf dem Effekt, dass zwei unterschiedliche Metalle oder metallische Legierungen, die miteinander in Kontakt stehen, eine temperaturabhängige Thermospannung erzeugen. Je nach Zusammensetzung der verwendeten Legierungen werden die Thermoelemente in verschiedene Typen eingeteilt, wie z. B. Typ K (NiCr/NiAl oder NiCr/Ni), Typ N (NiCrSi/NiSiMg) oder Typ J (Fe/CuNi).

Um aus der gemessenen Thermospannung auf einfache Weise die am Ort des Thermoelements vorherrschende Temperatur zu bestimmen, kann auf sogenannte Standardtabellen zurückgegriffen werden. In diesen Tabellen, die jeweils für einen bestimmten Typ von Thermoelement gelten, sind den verschiedenen Werten der Thermospannung jeweils Temperaturwerte zugeordnet. Dabei handelt es sich um theoretisch zu erwartende Werte, die auf der Grundlage von Materialkonstanten der thermoelektrischen Spannungsreihe berechnet worden sind.

Die Verwendung solcher Standardtabellen, wie sie insbesondere in der DIN EN 60584-1 festgelegt sind, führt aber in der Praxis zu teilweise erheblichen Abweichungen der ermittelten von der tatsächlichen Temperatur. Dies gilt vor allem bei Messungen im Tieftemperaturbereich, d. h. bei Temperaturen in der Größenordnung unterhalb von 100 K.

Um genauere Ergebnisse zu erzielen, wurde bisher, anstatt auf die Standardtabelle zurückzugreifen, eine aufwendige Kalibrierung des verwendeten Thermoelements durchgeführt.

Bei der sogenannten Vergleichskalibrierung wird die vom Thermoelement gelieferte Thermospannung bei einer großen Anzahl verschiedener Temperaturen mit den Temperaturwerten eines hochpräzisen Referenzthermometers verglichen. Die Abhängigkeit der Temperatur von der Thermospannung kann dann mit mathematischen Methoden interpoliert werden.

Bei der sogenannten Fixpunktkalibrierung dienen als bekannte Referenztemperaturen die thermodynamischen Gleichgewichtszustände zwischen den Phasen reiner Substanzen. Die hierfür verwendete ITS 90 (Internationale Temperaturskala von 1990) definiert 14 Fixpunkte zwischen 13,8 K (Triplepunkt von Helium) und 1357,8 K (Erstarrungspunkt von Kupfer).

Beide Kalibrationsmethoden sind sehr aufwendig, da für eine zufriedenstellende Genauigkeit bei einer Vielzahl von Referenztemperaturen gemessen werden muss. Zudem sind beide Methoden mit hohen Kosten verbunden, die im ersteren Fall durch das hochpräzise Referenzthermometer und den zusätzlich erforderlichen Kryostaten und im letzteren Fall durch den Einsatz verschiedener chemisch reiner Medien und spezieller Kühlanlagen verursacht werden.

Der Erfindung liegt die Aufgabe zugrunde, ein Verfahren zur Verfügung zu stellen, welches die Bestimmung von Temperaturen, insbesondere auch im Tieftemperaturbereich, mit geringem Aufwand, kostengünstig und gleichzeitig mit relativ hoher Genauigkeit erlaubt.

Diese Aufgabe wird bei dem eingangs genannten Verfahren erfindungsgemäß dadurch gelöst, dass die Thermospannung des Thermoelements gemessen wird, die zugehörige Standardtemperatur ($T_{Tab}$) aus einer Standardtabelle ermittelt wird und eine Ergebnistemperatur (T) aus der Standardtemperatur ($T_{Tab}$) und mindestens einem Parameter berechnet wird, wobei der mindestens eine Parameter zuvor durch eine Kalibrierung bei mindestens einer vorgegebenen Referenztemperatur bestimmt wurde.

Durch die Zugrundelegung der Werte einer Standardtabelle kann bei dem erfindungsgemäßen Verfahren die Kalibrierung des Thermoelements wesentlich schneller, einfacher und damit auch kostengünstiger durchgeführt werden als bei den Kalibrierverfahren des Standes der Technik. Die Erfassung einer vollständigen Temperatur-Spannungs-Kennlinie für das eingesetzte Thermoelement wird erfindungsgemäß dadurch ersetzt, dass die Werte der Standardtabelle, die eine Kennlinie für ein idealtypisches Thermoelement eines bestimmten Typs darstellen, durch eine Kalibrierung bei einzelnen Referenztemperaturen in Bezug auf das verwendete Thermoelement korrigiert werden. Dadurch wird die Genauigkeit der Ergebnistemperatur (T) im Vergleich zur Standardtemperatur ($T_{Tab}$) deutlich erhöht.

Die Ergebnistemperatur wird erfindungsgemäß anhand mindestens eines Parameters berechnet. Die Kalibrierung wird vorzugsweise so durchgeführt, dass der mindestens eine Parameter aus der mindestens einen vorgegebenen Referenztemperatur und der entsprechenden Standardtemperatur, die bei der mindestens einen Referenztemperatur ermittelt wird, berechnet wird. Die Ermittlung der entsprechenden Standardtemperatur erfolgt dabei wiederum anhand der gemessenen Thermospannung des Thermoelements bei der mindestens eine Referenztemperatur. Die Anzahl der Referenztemperaturen kann dabei im Vergleich zu den Verfahren des Standes der Technik sehr niedrig gewählt werden.

Durch die erfindungsgemäße Kombination der Standardtabelle mit Referenzmessungen wird somit eine in Bezug auf die praktischen Anforderungen äußerst vorteilhafte Kombination aus vergleichsweise geringem Aufwand, geringen Kosten und hoher Genauigkeit erzielt.

Unter einer Standardtabelle wird im Sinne der Erfindung jede Zuordnung zwischen Thermospannungen und Temperaturen verstanden, die auf eine Berechnung anhand von Konstanten der thermoelektrischen Spannungsreihe zurückgeht. Dabei ist es unerheblich, ob diese Berechnung für jede gemessene Thermospannung einzeln durchgeführt wird oder ob auf eine zuvor durchgeführte Berechnung einer Vielzahl von Spannungs/Temperatur-Paaren zurückgegriffen wird, die in einer Tabelle im eigentlichen Sinn niedergelegt sind.

Bei einer vorteilhaften Ausführungsform der Erfindung wird die Ergebnistemperatur (T) anhand mehrerer Parameter ($k_0$ bis $k_n$) gemäß folgender Gleichung (1) berechnet:

$$(1) \qquad T = (k_0 + k_1 \cdot T_{Tab} + k_2 \cdot T_{Tab}{}^2 + k_3 \cdot T_{Tab}{}^3 + \ldots + k_n \cdot T_{Tab}{}^n)^{1/m} \, ,$$

wobei n und m positive ganze Zahlen sind. Durch die Erhöhung des Grades des Polynoms n kann die Genauigkeit der Temperaturbestimmung gesteigert werden, was auf der anderen Seite natürlich zu einem höheren Aufwand bei der Bestimmung der Parameter $k_0$ bis $k_n$ führt.

Die Berechnung der Parameter $k_0$ bis $k_n$ erfolgt dabei, wie oben beschrieben, anhand von Temperaturwerten der Standardtabelle, die den gemessenen Thermospannungen des Thermoelements bei einer oder mehreren Referenztemperaturen entsprechen.

Dabei kann die Anzahl der eingesetzten Referenztemperaturen sehr niedrig gewählt werden. So wurde im Rahmen der vorliegenden Erfindung festgestellt, dass eine sehr hohe Genauigkeit der Temperaturbestimmung bereits mit n = 2 und unter Verwendung von nur zwei Referenztemperaturen erreicht werden kann. Daher erfolgt bei einer bevorzugten Ausführungsform der Erfindung die Berechnung der Ergebnistemperatur (T) gemäß folgender Gleichung (2), die sich mit n = 2, m = 2 und $k_1 = 0$ aus der Gleichung (1) ergibt:

$$(2) \qquad T = \sqrt{A + B \cdot T_{Tab}{}^2} \, .$$

Im Rahmen der Kalibrierung werden dabei die Parameter A (entspricht $k_0$) und B (entspricht $k_2$) gemäß den folgenden Gleichungen (3) und (4) berechnet:

$$(3) \quad B = \frac{T_{ref,1}^2 - T_{ref,2}^2}{T_{Tab,1}^2 - T_{Tab,2}^2},$$

$$(4) \quad A = T_{ref,1}^2 - B \cdot T_{Tab,1}^2$$

oder

$$A = T_{ref,2}^2 - B \cdot T_{Tab,2}^2,$$

wobei $T_{ref,1}$ eine erste und $T_{ref,2}$ eine zweite Referenztemperatur ist, und wobei $T_{Tab,1}$ und $T_{Tab,2}$ die jeweiligen Standardtemperaturen sind, die den gemessenen Thermospannungen des Thermoelements bei der ersten und der zweiten Referenztemperatur $T_{ref,1}$ bzw. $T_{ref,2}$ entsprechen.

Insbesondere bei einer Beschränkung auf lediglich zwei Referenztemperaturen ist das erfindungsgemäße Verfahren mit einem wesentlich geringeren Aufwand verbunden ist als die Kalibrationsmethoden des Standes der Technik.

Die mindestens eine Referenztemperatur ist bei dem erfindungsgemäßen Verfahren frei wählbar. Bevorzugt werden jedoch Referenzpunkte gewählt, die der Temperatur eines thermodynamischen Gleichgewichts entsprechen und die daher technisch einfach und kostengünstig zu realisieren sind.

Bevorzugte Referenztemperaturen sind beispielsweise der Siedepunkt von Stickstoff und/oder der Taupunkt von Wasser.

Das erfindungsgemäße Verfahren kann grundsätzlich mit Thermoelementen beliebigen Typs eingesetzt werden, wobei die Verwendung eines Thermoelements vom Typ K besonders günstig ist. Mit dieser Art von Thermoelement liefert das erfindungsgemäße Verfahren besonders genaue Ergebnisse, insbesondere auch im Tieftemperaturbereich.

Auch in Verbindung mit Thermoelementen vom Typ J oder Typ N kann das erfindungsgemäße Verfahren vorteilhaft eingesetzt werden.

Als Standardtabelle wird bei einer bevorzugten Ausführungsform des erfindungsgemäßen Verfahrens die in der Norm DIN EN 60584-1 niedergelegte Standardtabelle eingesetzt.

Das erfindungsgemäße Verfahren wird bevorzugt zur Bestimmung von Temperaturen im Tieftemperaturbereich verwendet. Unter dem Tieftemperaturbereich werden dabei Temperaturen unterhalb von etwa 100 K verstanden, insbesondere auch Temperaturen unterhalb von etwa 50 K.

Der Erfindung liegt ferner die Aufgabe zugrunde, eine Vorrichtung zur Temperaturbestimmung vorzuschlagen, die die Bestimmung von Temperaturen mit geringem Aufwand und gleichzeitig hoher Genauigkeit erlaubt.

Diese Aufgabe wird bei der eingangs genannten Vorrichtung erfindungsgemäß dadurch gelöst, dass die Vorrichtung ein Thermoelement, eine Messeinheit zur Messung der Thermospannung des Thermoelements sowie eine Auswerteeinheit umfasst, die anhand der Thermospannung bei der zu bestimmenden Temperatur, der Thermospannung bei mindestens einer Referenztemperatur und den diesen Thermospannungen entsprechenden Standardtemperaturen ($T_{Tab}$) einer Standardtabelle die Ergebnistemperatur (T) berechnet.

Bei gattungsgemäßen Vorrichtungen zur Temperaturbestimmung kann eine Auswerteeinheit dazu dienen, die gemessene Thermospannung anhand der programmierten oder berechneten Werte der Standardtabelle, die sich aus der thermoelektrischen Spannungsreihe ergeben, in die Temperatur umzurechnen.

Erfindungsgemäß wird durch die Auswerteeinheit die Ergebnistemperatur (T) zusätzlich anhand von mindestens einem Parameter berechnet, wie dies bereits im Zusammenhang mit dem erfindungsgemäßen Verfahren beschrieben wurde.

Die erfindungsgemäße Auswerteeinheit ist bevorzugt programmierbar. Dabei werden insbesondere die Gleichungen, die zur Berechnung des mindestens einen Parameters sowie der Ergebnistemperatur nach dem erfindungsgemäßen Verfahren zum Einsatz kommen, in der Auswerteeinheit abgespeichert.

Weiter ist es bevorzugt, wenn die erfindungsgemäße Vorrichtung zusätzlich eine Ausgabeeinheit umfasst. Dabei handelt es sich beispielsweise um einen Bildschirm oder ein Display, mit dem die Ergebnistemperatur angezeigt wird. Alternativ kann das Messergebnis auch auf elektronische Weise von der Vorrichtung an eine weitere Einrichtung oder eine übergeordnete Messanordnung weitergegeben werden.

Bei einer bevorzugten Ausführungsform der erfindungsgemäßen Vorrichtung umfasst diese ein Thermoelement vom Typ K. Alternativ kann die Vorrichtung auch ein Thermoelement vom Typ J, vom Typ N oder von einem anderen Typ umfassen.

Weitere Vorteile und Ausführungsformen der erfindungsgemäßen Vorrichtung ergeben sich aus der obigen Beschreibung des erfindungsgemäßen Verfahrens.

Die erfindungsgemäße Vorrichtung kann bevorzugt zur Bestimmung von Temperaturen im Tieftemperaturbereich eingesetzt werden.

Diese und weitere Vorteile der Erfindung werden anhand der folgenden Ausführungsbeispiele unter Bezugnahme auf die beigefügten Figuren näher erläutert. Es zeigen im einzelnen:

Figur 1: eine schematische Darstellung einer erfindungsgemäßen Vorrichtung;

Figur 2: Vergleich der Standardtemperatur eines Thermoelements vom Typ K mit der durch ein hochpräzises Referenzthermometer gemessenen Temperatur;

Figur 3: Darstellung des Messfehlers bei der Temperaturbestimmung gemäß eines Ausführungsbeispiels des erfindungsgemäßen Verfahrens mit einem Thermoelement vom Typ K;

Figur 4: Darstellung des Messfehlers bei der Temperaturbestimmung gemäß eines Ausführungsbeispiels des erfindungsgemäßen Verfahrens mit einem Thermoelement vom Typ J; und

Figur 5: Darstellung des Messfehlers bei der Temperaturbestimmung gemäß eines Ausführungsbeispiels des erfindungsgemäßen Verfahrens mit einem Thermoelement vom Typ N.

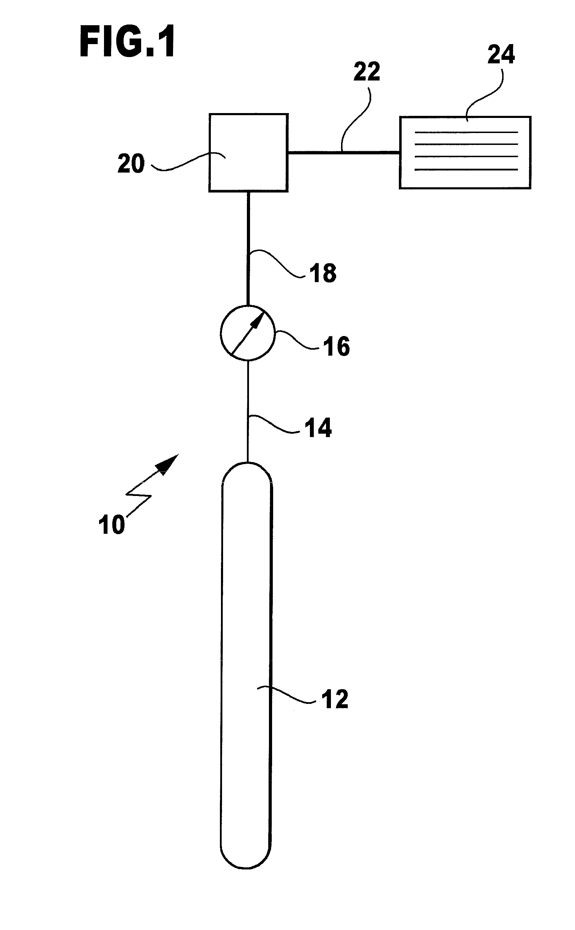

Ein Ausführungsbeispiel einer erfindungsgemäßen Vorrichtung zur Temperaturbestimmung ist in der Figur 1 schematisch dargestellt und dort als Ganzes mit 10 bezeichnet.

Die Vorrichtung 10 umfasst ein Thermoelement 12, das über eine elektrische Verbindung 14 mit einer Messeinheit 16 zur Messung der Thermospannung des Thermoelements 12 verbunden ist. Die Messeinheit 16 ist über eine Datenleitung 18 mit einer Auswerteeinheit 20 derart verbunden, dass die gemessene Spannung an die Auswerteeinheit 20 weitergegeben werden kann.

An die Auswerteeinheit 20 ist schließlich über eine weitere Datenleitung 22 eine Ausgabeeinheit 24 angeschlossen, so dass Informationen von der Auswerteeinheit 20 an die Ausgabeeinheit 24 übermittelt werden können.

Das erfindungsgemäße Verfahren funktioniert wie folgt: In Abhängigkeit von der jeweiligen Umgebungstemperatur des Thermoelements 12 wird an diesem eine Thermospannung erzeugt, die durch die Messeinheit 16 gemessen und an die Auswerteeinheit 20 weitergegeben wird. Die Auswerteeinheit 20 bestimmt anhand dieser Thermospannung die zugehörige Standardtemperatur aus einer Standardtabelle, z. B. der Standardtabelle gemäß DIN EN 60584-1. Dabei können die einzelnen Werte der Standardtabelle in der Auswerteeinheit 20 abgespeichert sein oder von dieser anhand der Konstanten der thermoelektrischen Spannungsreihe berechnet werden.

Bei der Kalibrierung wird das Thermoelement 12 auf eine vorgegebene Referenztemperatur gebracht, wobei sowohl die bekannte Referenztemperatur als auch die ermittelte zugehörige Standardtemperatur in der Auswerteeinheit 20 gespeichert werden. Dieser Vorgang wird für jede Referenztemperatur wiederholt.

Nach der Kalibrierung kann eine unbekannte Temperatur in der Umgebung des Thermoelements 12 aus der zugehörigen Standardtemperatur sowie den gespeicherten Kalibrierungsdaten durch die Auswerteeinheit 20 berechnet werden. Die Berechnung der Ergebnistemperatur erfolgt dabei anhand mindestens eines Parameters, wie dies bereits oben beschrieben wurde.

Die Ergebnistemperatur kann von der Auswerteeinheit 20 an die Ausgabeeinheit 24 übermittelt und durch diese optisch angezeigt werden.

Selbstverständlich kann das erfindungsgemäße Verfahren auch ohne eine mit dem Thermoelement verbundene Auswerteeinheit durchgeführt werden, indem die Ermittlung der Standardtemperaturen und die Berechnung der Ergebnistemperatur getrennt von dem Thermoelement und der Messeinheit erfolgen.

Im folgenden wird ein Ausführungsbeispiel des erfindungsgemäßen Verfahrens und dessen Vorteile gegenüber dem Stand der Technik beschrieben, wobei die konkreten Zahlenwerte eines beispielhaften Thermoelements zugrundegelegt werden.

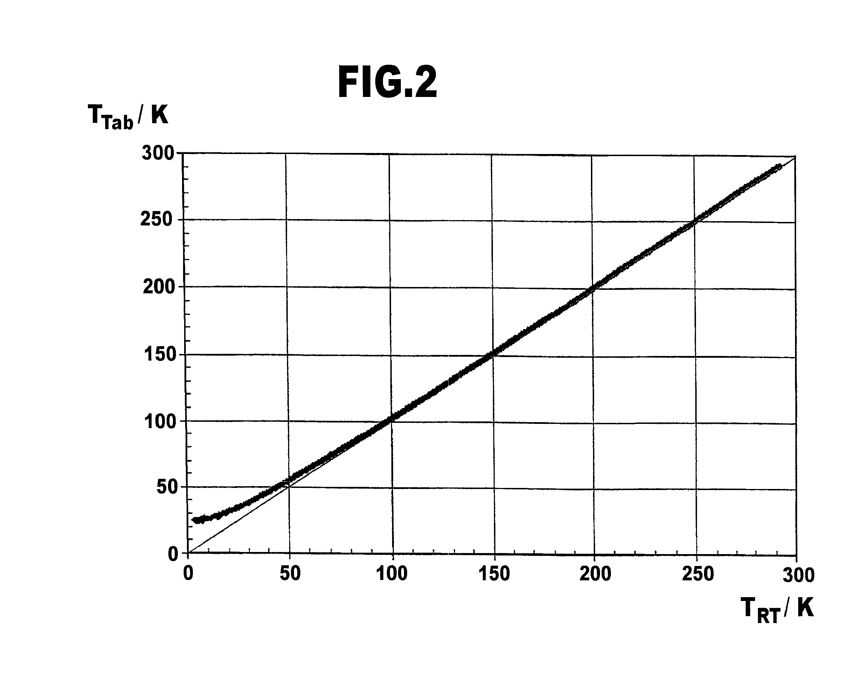

Das in Figur 2 dargestellte Diagramm zeigt die Ungenauigkeit der Temperaturbestimmung gemäß dem Stand der Technik, wenn lediglich auf eine Standardtabelle zurückgegriffen wird. Ausgehend von der mit einem Thermoelement vom Typ K gemessenen Thermospannung wurde anhand der Standardtabelle der DIN EN 60584-1 die entsprechende Standardtemperatur ($T_{Tab}$) ermittelt und gegen die mit einem hochpräzisen Referenzthermometer gemessene Temperatur ($T_{RT}$) aufgetragen. Der Vergleich mit der Ideallinie ($T_{Tab} = T_{RT}$) zeigt deutlich, dass im Tieftemperaturbereich, insbesondere unterhalb von 50 K, erhebliche Abweichungen zwischen der ermittelten Temperatur und der tatsächlichen Temperatur auftreten.

Um die Genauigkeit der Temperaturbestimmung zu verbessern, wurde unter Anwendung des erfindungsgemäßen Verfahrens die Ergebnistemperatur (T) gemäß der obigen Gleichung (2) ermittelt. Zur Bestimmung der Parameter A und B gemäß den Gleichungen (3) und (4) wurden als Referenztemperaturen zwei thermodynamische Gleichgewichtszustände gewählt, in diesem Fall der Siedepunkt von Stickstoff ($T_{ref,1}$ = 77,731 K) und der Taupunkt von Wasser ($T_{ref,2}$ = 273,12 K).

Die anhand der Standardtabelle für Typ-K-Thermoelemente gemäß DIN EN 60584-1 ermittelten Temperaturwerte betrugen in diesem Beispiel $T_{Tab,1}$ = 80,802 K für die am Siedepunkt von Stickstoff gemessene Thermospannung und $T_{Tab,2}$ = 273,28 K für die am Taupunkt von Wasser gemessene Thermospannung.

Für den Parameter B ergibt sich somit gemäß Gleichung (3)

$$B = \frac{77,731^2 - 273,12^2}{80,802^2 - 273,28^2} = 1,00586080.$$

Wird der ermittelte Wert für B in die Gleichung (4) eingesetzt, ergibt sich

$$A = (77,731 \text{ K})^2 - 1,00586080 \cdot (80,802 \text{ K})^2 = -525,119791 \text{ K}^2.$$

Mit diesen Parametern A und B lässt sich gemäß Gleichung (2) folgende Funktion für die mit dem hier verwendeten Thermoelement ermittelten Temperaturwerte aufstellen:

$$T = \sqrt{-525,119791 \text{ K}^2 + 1,00586080 \cdot T_{Tab}^2} \; .$$

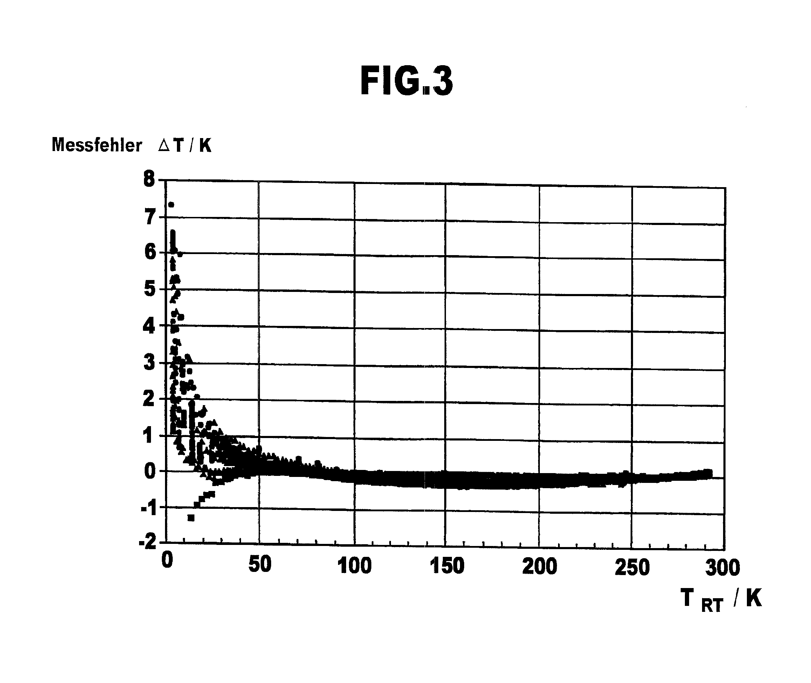

Die Genauigkeit der gemäß dieser Gleichung berechneten Ergebnistemperaturen T ist in dem Schaubild der Figur 3 illustriert. Dort ist der Messfehler $\Delta T$, d. h. die Differenz zwischen der mittels des Thermoelements erfindungsgemäß bestimmten Ergebnistemperatur T und der mit einem hochpräzisen Referenzthermometer gemessenen Temperatur $T_{RT}$, gegen $T_{RT}$ aufgetragen. In einem Bereich zwischen ca. 50 K und ca. 300 K, d. h. selbst im Tieftemperaturbereich unterhalb von 100 K, liefert das erfindungsgemäße Verfahren hervorragende Ergebnisse mit einem Messfehler deutlich unterhalb von 1 K. Doch auch bei Temperaturen unterhalb von 50 K steigt der Messfehler bei Annäherung an den absoluten Nullpunkt nicht über ca. 7 K, womit das erfindungsgemäße Verfahren in diesem Temperaturbereich deutlich bessere Ergebnisse liefert als die reine Verwendung der Standardtabelle, wie sich aus einem Vergleich mit der Figur 2 ergibt.

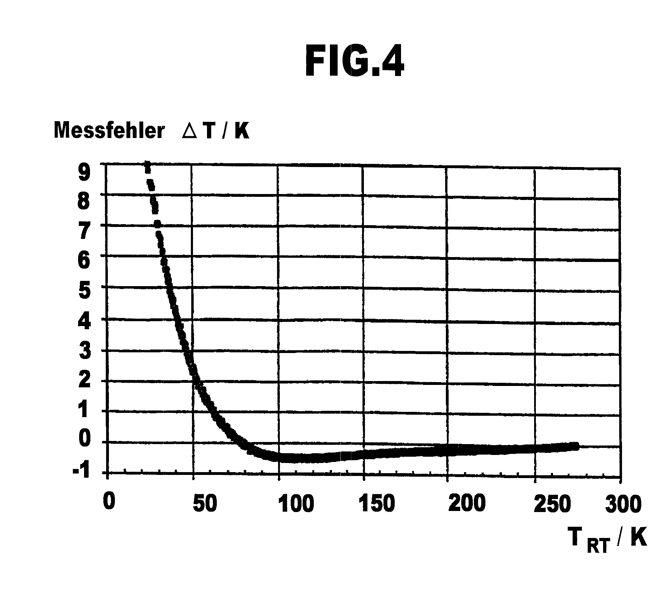

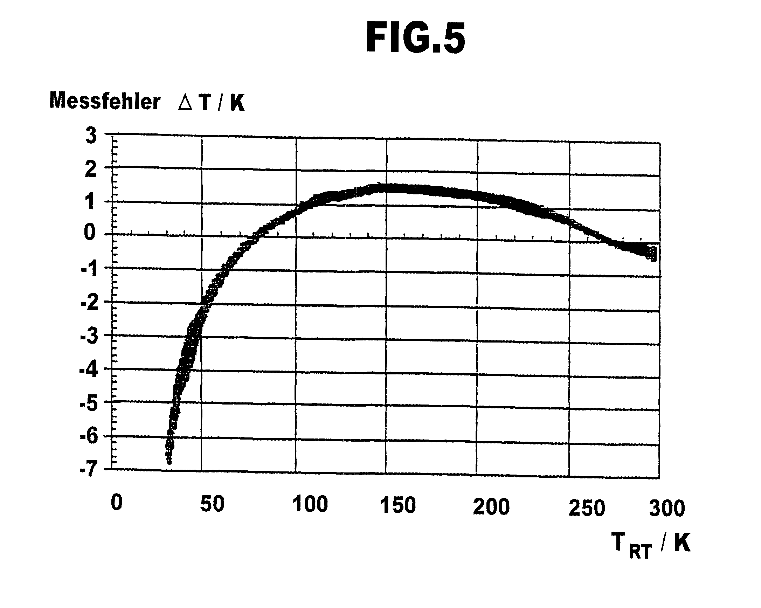

Analog zu der oben beschriebenen Vorgehensweise wurde das erfindungsgemäße Verfahren auch bei der Temperaturbestimmung mit einem Thermoelement vom Typ J und vom Typ N angewendet. Die dabei ermittelten Messfehler sind in der Figur 4 (Typ J) bzw. in der Figur 5 (Typ N) dargestellt.

Obwohl hier die Messfehler zum Teil größer sind als beim Thermoelement vom Typ K, ergibt ein Vergleich mit der Figur 2, dass das erfindungsgemäße Verfahren auch in diesen Fällen zu einer Verbesserung der Genauigkeit der Temperaturbestimmung, insbesondere auch im Tieftemperaturbereich unterhalb von 100 K, führt.

**Patentansprüche**

1. Verfahren zur Temperaturbestimmung mittels eines Thermoelements, bei dem die Thermospannung des Thermoelements gemessen wird, die zugehörige Standardtemperatur ($T_{Tab}$) aus einer Standardtabelle ermittelt wird und eine Ergebnistemperatur (T) aus der Standardtemperatur ($T_{Tab}$) und mindestens einem Parameter berechnet wird, wobei der mindestens eine Parameter zuvor durch eine Kalibrierung bei mindestens einer vorgegebenen Referenztemperatur bestimmt wurde.

2. Verfahren nach Anspruch 1, wobei die Kalibrierung so durchgeführt wird, dass der mindestens eine Parameter aus der mindestens einen vorgegebenen Referenztemperatur und der entsprechenden Standardtemperatur, die bei der mindestens einen Referenztemperatur ermittelt wird, berechnet wird.

3. Verfahren nach Anspruch 1 oder 2, wobei die Ergebnistemperatur (T) anhand mehrerer Parameter ($k_0$ bis $k_n$) gemäß folgender Gleichung (1) berechnet wird:

$$(1) \quad T = (k_0 + k_1 \cdot T_{Tab} + k_2 \cdot T_{Tab}^2 + k_3 \cdot T_{Tab}^3 + ... + k_n \cdot T_{Tab}^n)^{1/m} \, ,$$

wobei n und m positive ganze Zahlen sind.

4. Verfahren nach Anspruch 3, wobei die Ergebnistemperatur (T) anhand von zwei Parametern (A und B) gemäß folgender Gleichung (2) berechnet wird:

$$(2) \quad T = \sqrt{A + B \cdot T_{Tab}^2} \, .$$

5. Verfahren nach einem der vorstehenden Ansprüche, wobei die Kalibrierung bei zwei Referenztemperaturen erfolgt.

6. Verfahren nach Anspruch 4 oder 5, wobei die Parameter A und B gemäß den folgenden Gleichungen (3) und (4) berechnet werden:

$$(3) \quad B = \frac{T_{ref,1}^2 - T_{ref,2}^2}{T_{Tab,1}^2 - T_{Tab,2}^2} \, ,$$

$$(4) \quad A = T_{ref,1}^2 - B \cdot T_{Tab,1}^2$$

oder

$$A = T_{ref,2}^2 - B \cdot T_{Tab,2}^2 \, ,$$

wobei $T_{ref,1}$ eine erste und $T_{ref,2}$ eine zweite Referenztemperatur ist, und wobei $T_{Tab,1}$ und $T_{Tab,2}$ die jeweiligen Standardtemperaturen sind, die den gemessenen Thermospannungen des Thermoelements bei der ersten und der zweiten Referenztemperatur $T_{ref,1}$ bzw. $T_{ref,2}$ entsprechen.

7. Verfahren nach einem der vorstehenden Ansprüche, wobei die mindestens eine Referenztemperatur der Temperatur eines thermodynamischen Gleichgewichts entspricht.

8. Verfahren nach einem der vorstehenden Ansprüche, wobei eine Referenztemperatur der Siedepunkt von Stickstoff ist.

9. Verfahren nach einem der vorstehenden Ansprüche, wobei eine Referenztemperatur der Taupunkt von Wasser ist.

10. Verfahren nach einem der vorstehenden Ansprüche, wobei das Thermoelement ein Thermoelement vom Typ K ist.

11. Verfahren nach einem der Ansprüche 1 bis 9, wobei das Thermoelement ein Thermoelement vom Typ J oder Typ N ist.

12. Verfahren nach einem der vorstehenden Ansprüche, wobei die Standardtabelle der DIN EN 60584-1 entspricht.

13. Verwendung des Verfahrens nach einem der vorstehenden Ansprüche zur Bestimmung von Temperaturen im Tieftemperaturbereich.

14. Vorrichtung (10) zur Temperaturbestimmung, umfassend ein Thermoelement (12), eine Messeinheit (16) zur Messung der Thermospannung des Thermoelements (12) sowie eine Auswerteeinheit (20), die anhand der Thermospannung bei der zu bestimmenden Temperatur, der Thermospannung bei mindestens einer Referenztemperatur und den diesen Thermospannungen entsprechenden Standardtemperaturen ($T_{Tab}$) einer Standardtabelle die Ergebnistemperatur (T) berechnet.

15. Vorrichtung (10) nach Anspruch 14, wobei die Auswerteeinheit (20) programmierbar ist.

16. Vorrichtung (10) nach Anspruch 14 oder 15, wobei die Vorrichtung (10) eine Ausgabeeinheit (24) umfasst.

17. Vorrichtung (10) nach einem der Ansprüche 14 bis 16, wobei das Thermoelement (12) ein Thermoelement vom Typ K ist.

18. Vorrichtung (10) nach einem der Ansprüche 14 bis 16, wobei das Thermoelement (12) ein Thermoelement vom Typ J oder Typ N ist.

19. Verwendung der Vorrichtung nach einem der Ansprüche 14 bis 18 zur Bestimmung von Temperaturen im Tieftemperaturbereich.

# FIG.1

**10** ↗

**20** — **22** — **24**

**18**

**16**

**14**

**12**

# FIG.2

# FIG.3

Messfehler $\Delta T / K$

$T_{RT} / K$

# FIG.4

# FIG.5

**Europäisches**
**Patentamt**

**EUROPÄISCHER RECHERCHENBERICHT**

Nummer der Anmeldung

EP 06 12 3411

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 30 38 834 A1 (LASZLO VON KOERTVELYESSY) 27. Mai 1982 (1982-05-27) * Seiten 4-10 * ----- | 1-19 | INV. G01K15/00 |
| X | JP 10 111188 A (SHIMAZU KINZOKU KK) 28. April 1998 (1998-04-28) * das ganze Dokument * ----- | 1-19 | |
| X | GB 2 183 342 A (JOHNSON MATTHEY PLC) 3. Juni 1987 (1987-06-03) * das ganze Dokument * ----- | 1,2, 7-12, 14-18 | |

**RECHERCHIERTE SACHGEBIETE (IPC)**

G01K

Der vorliegende Recherchenbericht wurde für alle Patentansprüche erstellt

| Recherchenort | Abschlußdatum der Recherche | Prüfer |
|---|---|---|
| Den Haag | 8. März 2007 | Barthélemy, Matthieu |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 12 3411

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-03-2007

| Im Recherchenbericht angeführtes Patentdokument | | | Datum der Veröffentlichung | Mitglied(er) der Patentfamilie | | Datum der Veröffentlichung |
|---|---|---|---|---|---|---|
| DE 3038834 | A1 | | 27-05-1982 | KEINE | | |
| JP 10111188 | A | | 28-04-1998 | JP | 2898928 B2 | 02-06-1999 |
| GB 2183342 | A | | 03-06-1987 | KEINE | | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202004019716 U1

- DE 2221147

**In der Beschreibung aufgeführte Nicht-Patentliteratur**

- **C. AMBERG et al.** Welche Thermospannungen entstehen in Thermoelement-Mess- und Kalibrierspaltungen?. *Technisches Messen,* 2003, vol. 70 (11), 503-509

- **H. LEHMANN ; F. BERNHARD.** Selbstkalibrierende Thermoelemente - Modeling und Design. *Technisches Messen,* 1997, vol. 64 (3), 91-99